# EUROPÄISCHE PATENTANMELDUNG

(11) **EP 2 657 741 A1**
(43) Veröffentlichungstag der Anmeldung: **30.10.2013**
(21) Anmeldenummer: 13165178.8
(22) Anmeldetag: 24.04.2013
(51) Int. Cl.: G02B 6/44

(54) **Lichtwellenleiter-Verteilerschrank**

(30) Priorität: 24.04.2012 DE 102012206743
(71) Anmelder: VV-Hammer GmbH, 73489 Jagstzell (DE)
(72) Erfinder: Hammer, Ralf, 73489 Jagstzell (DE)
(74) Vertreter: Raunecker, Klaus Peter

(57) **Zusammenfassung**

Die Erfindung betrifft einen Lichtwellenleiter-Verteilerschrank, mit in einem Gehäuse angeordneten Spleißmodulen, wobei aus einer Anzahl von vertikal übereinander angeordneten Spleißmodulen ein Spleißmodulstapel ausgebildet ist. Dabei weist mindestens ein Spleißmodul (7), insbesondere jedes Spleißmodul (7), eine Drittel Höheneinheit auf.

## Beschreibung

Die Erfindung betrifft einen Lichtwellenleiter-Verteilerschrank gemäß dem Oberbegriff des Anspruchs 1.

Verteilersysteme von Lichtwellenleitern (LWL) bestehen zumeist aus Spleißboxen, Kabelführungskanälen und Kabelabfangschienen, die in einem Verteilergehäuse angeordnet sind. Bei den bekannten Lichtwellenleiter-Verteilern dienen die als Spleißboxen bezeichneten Aufnahmekammern zur Trennung der eingebauten Teile in eingangs- und ausgangsseitige Teilbereiche. Die Höhe der Spleißboxen zur Verteilung einer Vielzahl von Lichtwellenleitern bestimmt unter anderem die Bauhöhe des gesamten Verteilersystems.

Aus der DE 40 08 840 C1 ist ein Spleißverteiler für Lichtwellenleiter (LWL) mit LWL-Spleißkämmen bekannt, in denen die LWL-Einzelfasern von ankommenden LWL-Außenkabeln oder LWL-Faserbündeln verteilt werden und mit abgehenden LWL-Einzelfasern verbunden werden können. Die Außenkabel, die LWL-Faserbündel und die LWL-Einzelfasern können zugentlastet in einem Gehäuse angeordnet werden. Hierbei wird eine kompakte Einheit aus einer Basisträgerplatte, mehreren Trägerplatten mit jeweils mindestens einem LWL-Spleißverteiler und einem Deckel gebildet, die auf kleiner Befestigungsfläche übereinander gestapelt werden. Die Trägerplatten bieten die Möglichkeit einer zugentlasteten Zuführung der LWL-Außenkabel, bestehend aus LWL-Faserbündeln mit einer Vielzahl von Einzelfasern.

Des Weiteren ist aus der DE 41 07 228 C2 eine LWL-Spleißbox bekannt, die als nach vorne und oben offener LWL-Spleißauszug ausgebildet ist. Dieser ist mit zweiteiligen Teleskopauszügen in einen zur Vorderseite offenen Baugruppenträger eingebaut. Eine Frontblende mit LWL-Kupplungen ist im Bereich der vorderen Unterkante des Spleißauszuges abklappbar angeordnet und kann mittels lösbarer Verschlusselemente in der Schließstellung an dem Spleißauszug arretiert werden. Mehrere LWL-Spleißkassetten sind dabei auf einem Zwischenboden des Spleißauszuges übereinander angeordnet. Im Bodenbereich des Spleißauszuges ist unterhalb der Spleißkassetten ein Ablagefach für Rangierleitungen oder dergleichen ausgebildet.

Auch bekannt sind aus DE 102 10 778 B4 ein Gehäuse oder Gestell mit einer Kabelführungsvorrichtung für Glasfaserkabel mit mindestens einem Führungsansatz mit gerundetem Umlenkabschnitt, der an einem Tragkörper von diesem mit seiner Krümmungsachse senkrecht abstehend angebracht ist. Der Tragkörper ist eine im Wesentlichen rechteckförmige horizontale Tragplatte. In Verlaufsrichtung einer aufzulegenden Glasfaser sind entsprechende Umlenkeinheiten angeordnet. Die Tragplatte zum Anbringen an Rahmenschenkeln oder Montageschienen des Gehäuses oder Gestells weist Befestigungsabschnitte auf und ist mit nach unten abgebogenen weiteren Umlenkabschnitten versehen. Eine solche Umlenkung ist z.B. günstig, wenn Glasfaserkabel an einer Frontseite oder Rückseite eines horizontal angeordneten Einbaugehäuses angeschlossen und anschließend nach oben oder unten geführt werden sollen.

Es ist Aufgabe der Erfindung, einen Lichtwellenleiter-Verteilerschrank mit gegenüber dem Stand der Technik erhöhter Packungsdichte zu schaffen.

Erfindungsgemäß wird diese Aufgabe mit den in Anspruch 1 genannten Merkmalen gelöst. Die weiteren rückbezogenen Ansprüche betreffen vorteilhafte Aus- und Weiterbildungen der Erfindung.

Die Erfindung schließt einen Lichtwellenleiter-Verteilerschrank ein, mit in einem Gehäuse angeordneten Spleißmodulen, wobei aus einer Anzahl von vertikal übereinander angeordneten Spleißmodulen ein Spleißmodulstapel ausgebildet ist und zumindest ein Spleißmodul über eine vertikale Achse aus dem Spleißmodulstapel nach außen ausschwenkbar ist.

Bei der erfindungsgemäßen Lösung kann es sich insbesondere um einen Lichtwellenleiter-Verteilerschrank, aus dem englischen Sprachraum übernommen auch als ODF bezeichnet (optical distribution frame), handeln.

Das Gehäuse eines Verteilerschranks, ausgeführt als Standschrank, umfasst eine Abdeckung im Boden- und Deckelbereich, optional auch Seitenteile. Eine vordere Fronttüre ist entweder einteilig oder auch mehrteilig ausgeführt, um einen erleichterten Zugang zu öfter frequentierten Teilbereichen im Verteilerschrank zu gewährleisten. Meist werden derartige Verteilerschränke von der Frontseite aus bedient. Weiter ausgebildet ist ein Einführungskabelkanal für Lichtwellenleiter, um eine getrennte Führung der ankommenden und abgehenden Kabel zu gewährleisten.

In besonders bevorzugter Ausführungsform kann jedes Spleißmodul eine Drittel Höheneinheit aufweisen; mit anderen Worten können pro Höheneinheit drei Spleißmodule übereinander angeordnet werden. Eine Höheneinheit als standardisierte Maßeinheit für die Höhe eines Elektronikgehäuses entspricht 1¾Zoll. In jedem Spleißmodul können hierbei über Stecker bis zu 24 Fasern abgelegt werden. Hierdurch wird eine besonders kompakte Einheit mit sehr hoher Packungsdichte gebildet. Das Spleißmodul kann dabei aus einem metallischen Werkstoff hergestellt, tauchgrundiert und pulverbeschichtet sein. Insbesondere kann das Spleißmodul aus Stahl, ELO verzinkt hergestellt sein.

Insbesondere können in einem Modulstapel auch alle Spleißmodule über eine vertikale Achse nach außen ausschwenkbar ausgeführt sein. Hierzu sind meist, von der Frontseite aus betrachtet, auf der rechten oder linken Seite Drehgelenke angeordnet. Denkbar sind allerdings auch Modulstapel, bei denen die jeweiligen Spleißmodule im Stapel alternierend um eine vertikale Achse schwenkbar sind. Mit anderen Worten, die Spleißmodule können im Spleißmodulstapel, von der Frontseite her betrachtet, einzeln oder als ganze Stapelteile im Paket wechselseitig auf der linken bzw. rechten Seite drehbar ausgeführt sein. Im eingeklappten Zustand können auch Arretierungseinrichtungen am Spleißmodul für eine definierte Schließstellung sorgen.

Ein Spleißmodul ist leicht aus dem Spleißmodulstapel ausschwenkbar, wodurch der Zugang zu den üblicherweise auf dem Bodenblech des Spleißmoduls befestigten Spleißkassetten erleichtert wird. Die Verkabelung des Spleißmoduls, insbesondere der Anschluss der LWL-Kupplungen, ist auf diese Weise einfach möglich. Die nach der Verdrahtung erfolgende weitere Verteilung mit Hilfe von sogenannten Patchkabeln oder Rangierleitungen ist ebenfalls vorteilhaft ausgeführt, da diese auf den Führungselementen auch vorrätig abgelegt werden können.

Ein besonderer Vorteil der erfindungsgemäßen Lösung ist, dass der Lichtwellenleiter-Verteilerschrank aufgrund der gestapelten Baueinheiten eine hohe Packungsdichte und Bedienerfreundlichkeit aufweist. Da jedes Spleißmodul für sich ausschwenkbar ist, wird bei der Vielzahl der zu verlegenden Kabel eine übersichtliche Untereinheit eines Baugruppenträgers geschaffen. Ein schneller und einfacher Einbau der einzelnen Lichtwellenleiter ist dadurch gewährleistet.

Die erfindungsgemäße Lösung kommt also mit einem Schwenkvorgang aus, bei dem die zurückgelegten Wegstrecken so begrenzt sind, dass gegenüber herkömmlichen Spleißverteilern nur mit geringer oder gar keiner Kabelbewegung bzw. Kabelüberlänge gearbeitet werden muss. Die Kabel müssen durch geringere Wegstecken beim Öffnen bzw. Schließen des Moduls auch nicht nachgeführt werden.

In einer weiteren vorteilhaften Ausführungsform kann in jeden der Führungsschläuche ein Modul adressiert und auf der Eingangsseite unterscheidbar gekennzeichnet sein. Zur Unterscheidbarkeit können unterschiedliche Farbgebungen verwendet werden. Derartige Führungsschläuche können beispielsweise sogenannte Miniflexschläuche sein, von denen jeder einzelne ein bestimmtes Modul adressiert und auf der Einführungsseite farblich gekennzeichnet ist. Auf diese Weise werden durch die Verwendung der Miniflexschläuche bei der Umlenkung der Fasern auch die zulässigen Biegeradien eingehalten.

Vorteilhafterweise können in einem Spleißmodul bis zu 24 Fasern angeschlossen sein. In einem Modul können zwei Spleißkassetten für jeweils 12 Fasern angeordnet sein. Derartige kleine Baugruppen gewährleisten eine übersichtliche Handhabung beim Anschließen der Lichtwellenleiter aus Kabelbündeln an der Frontseite eines Spleißmodulstapels. Hierdurch werden Montagezeiten wesentlich reduziert.

Ein weiterer Vorteil kann resultieren, wenn in einem Spleißmodul eine Spleißkassette für jeweils 24 Fasern angeordnet ist.

In einer vorteilhaften Weiterbildung der Erfindung können seitlich am Spleißmodulstapel Führungselemente entlang einer der Seitenwände des Gehäuses angeordnet sein, über die Patchkabel zum jeweiligen Spleißmodul geführt werden können. Derartige tonnenförmige Führungs- oder Umlenkelemente sind so gestaltet, dass die Kabel ohne Knickstellen in ausreichendem Radius umgelenkt und im Verteilerschrank geführt werden können. Insbesondere bei einheitlich langen Patchkabeln werden aufgrund der unterschiedlich langen Anschlüsse die Überlangen der Kabel auf derartigen Führungselementen abgelegt.

Daneben ist es von Vorteil, wenn die vertikale Achse, um welche die Spleißmodule geschwenkt werden, in der Weise angeordnet ist, dass sie zwischen der Rückwand des Verteilerschrankes und den an das Spleißmodul angeschlossenen Patchkabeln verläuft. Durch die beschriebene Anordnung der vertikalen Achse werden die Anschlusskabel bzw. die Lichtwellenleiter besser zugänglich, ohne dass sich die Anordnung der vertikalen Achse störend beispielsweise bei Wartungs- oder Spleißarbeiten auswirkt.

Auch eine andere Anordnung der Achse ist selbstverständlich denkbar.

In einer weiteren vorteilhaften Ausführung der Erfindung können eine Mehrzahl von Spleißmodulen, insbesondere 9, einem Kabelführungselement zugeordnet sein, welches ein Kammelement, ein Biegekontrollelement, sowie eine Trommel aufweist. Hierdurch wird eine besonders vorteilhafte Führung, insbesondere auch Vereinzelung der jeweiligen Patchkabel ermöglicht.

Dabei ist es insbesondere möglich, dass an der Vorderseite eines Spleißmoduls Steckverbindungen in der Weise angeordnet sind, dass sie in ihrer Schmalseite vertikal verlaufen. Es versteht sich von selbst, dass diese Anordnung auch in anderer Weise ausgebildet sein kann. Diese liegende Ausführung der Steckverbindungen trägt zu der verringerten Bauhöhe der Spleißmodule gegenüber dem Stand der Technik bei und ermöglicht die Integration insbesondere von drei Spleißmodulen pro Höheneinheit.

Weiterhin ist es von Vorteil, dass an der Vorderseite des Spleißmoduls ein Ablageblech angeordnet sein kann, auf welchem die Patchkabel abgelegt werden können, die zum Spleißmodul führen. Das Ablageblech kann in vorteilhafter Weise auch dazu verwendet werden, Beschriftungen aufzunehmen. Dabei kann an der Vorderseite des Ablagebleches ein schwenkbares Abdeckblech angebracht sein, welches um eine Achse hochgeschwenkt werden kann. Im geschlossenen Fall trägt das Abdeckblech zur Führung der Patchkabel bei. In geöffnetem Zustand des Abdeckbleches werden die Steckverbindungen beispielsweise für Testzwecke zugänglich.

Weitere vorteilhafte Weiterbildungen und Ausgestaltungen der Erfindung ergeben sich aus den nachfolgend anhand der Zeichnungen prinzipmäßig beschriebenen Ausführungsbeispielen. Dabei versteht es sich von selbst, dass die in den Figuren verwendete Bemaßung lediglich eine - wenn auch vorteilhafte - Variante einer Vielzahl möglicher Varianten der Erfindung darstellt.

Es zeigt:
- Fig. 1: schematisch eine Frontansicht eines erfindungsgemäßen Lichtwellenleiter-Verteilerschranks;
- Fig. 2: in den Teilfiguren 2a bis 2c eine schematische Darstellung einer Kabelwanne zur Anbringung im unteren Teil des Lichtwellenleiter-Verteilerschrankes;
- Fig. 3: in den Teilfiguren 3a bis 3c eine exemplarische Ausführungsform eines Spleißmodulstapels;
- Fig. 4: eine perspektivische Darstellung einer weiteren Variante eines erfindungsgemäßen Hauptverteilerschrankes;
- Fig. 5: eine Detaildarstellung eines Kabelführungsmodules;
- Fig. 6: ein ausgeklapptes Spleißmodul, und
- Fig. 7: eine Detaildarstellung einer Kabelabfangplatte.

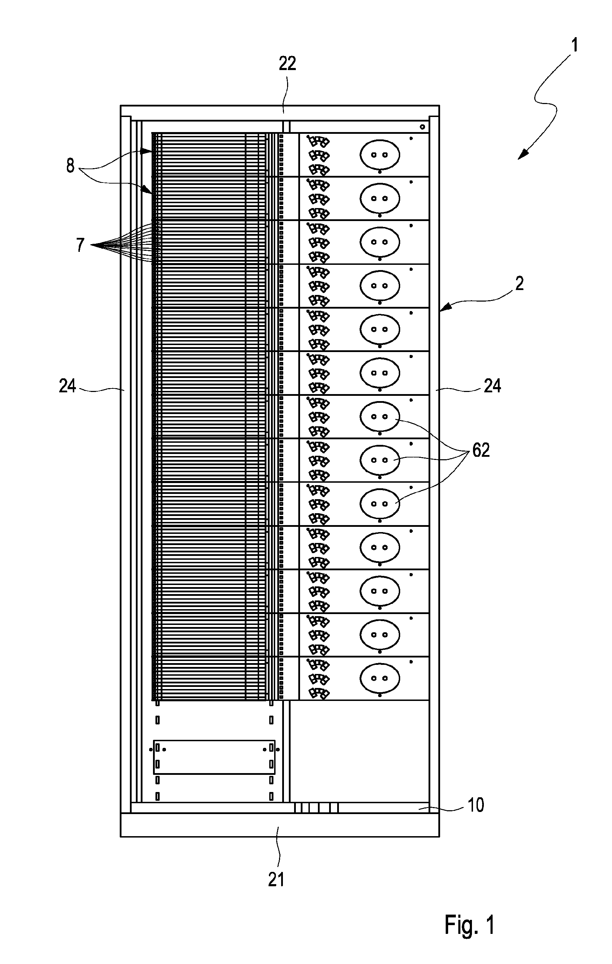

Fig. 1 zeigt schematisch eine Frontansicht eines Lichtwellenleiter-Verteilerschranks 1. Das Gehäuse 2 des Verteilerschranks 1 ist als Standschrank mit einer Bodenabdeckung 21 und einer Deckelabdeckung 22 ausgeführt und mit senkrechten Seitenteilen 24 versehen. In diesem Falle ist der Verteilerschrank 1 von der Frontseite aus zugänglich, die gegebenenfalls mit einer Fronttüre verschlossen werden kann. Die Anschluss- und Abgangskabel sind über, in der Figur nicht dargestellte, Kabeldurchführungen zentral über Ausnehmungen am Gehäuse 2 hindurchgeleitet.

Gut erkennbar in Figur 1 sind die in Spleißmodulstapeln 8 angeordneten Spleißmodule 7.

Ausgangsseitig sind Führungselemente für die Weiterleitung der einzelnen LWL-Fasern angeordnet, die als Trommeln 62 zur Ablage von Überlangen der Patchkabel ausgebildet sind.

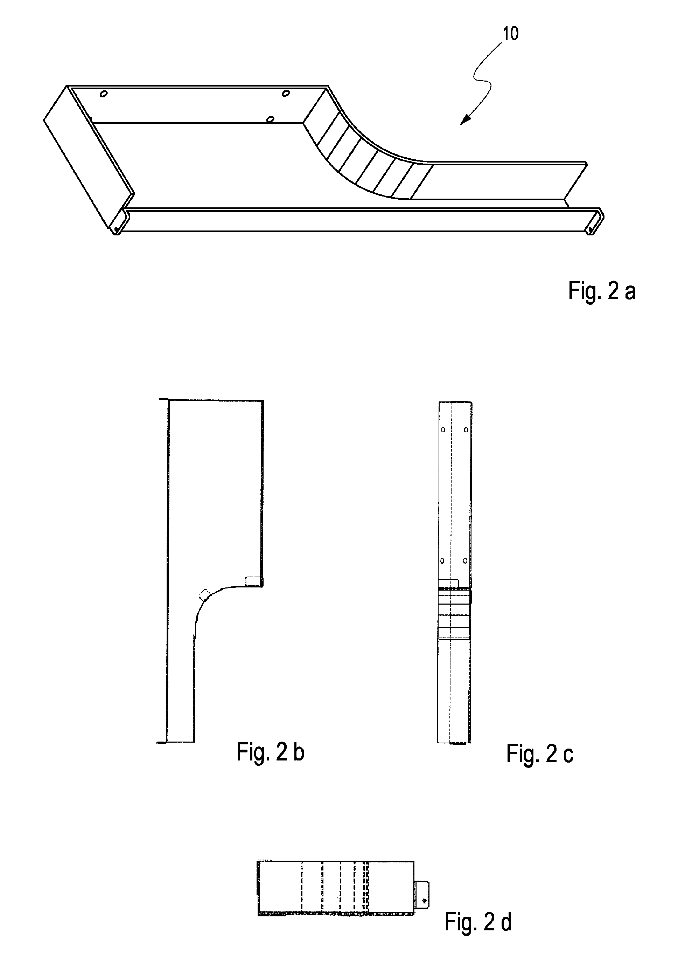

Figur 2 zeigt in den verschiedenen Teilansichten bzw. Schnittdarstellungen 2a bis 2c eine schematische Darstellung einer Kabelwanne 10, welche im unteren Bereich des Verteilerschrankes 1 angeordnet sein kann. Sie dient dazu, Kabel bzw. Kabelüberlängen mechanisch definiert im Inneren des Verteilerschrankes 1 abzulegen.

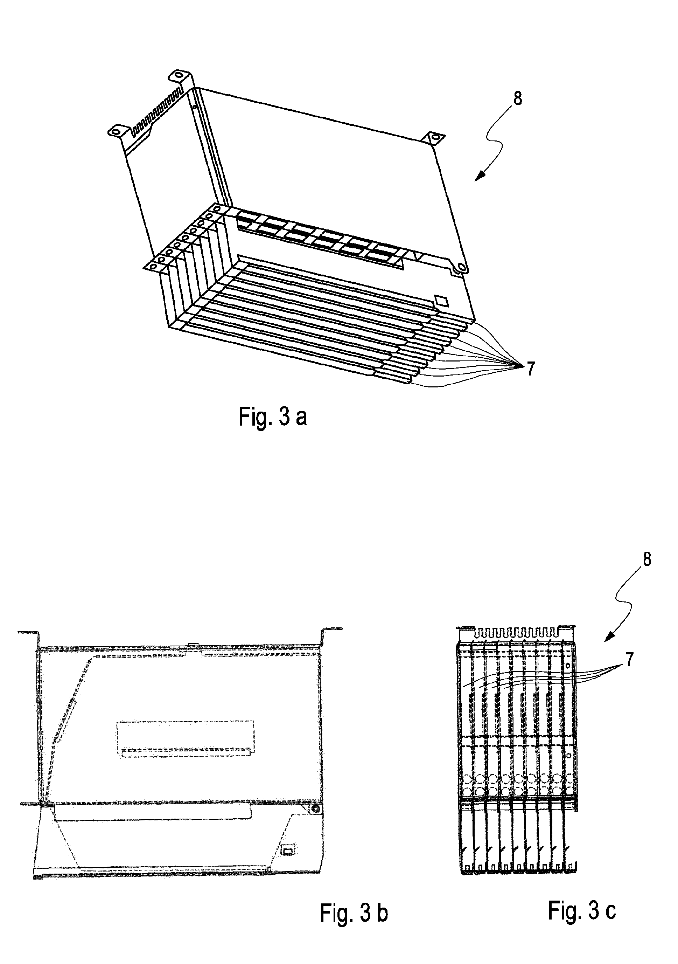

Fig. 3 zeigt in den verschiedenen Teilansichten bzw. Schnittdarstellungen 3a bis 3c eine schematische Darstellung eines Spleißmodulstapels 8 mit schwenkbaren Spleißmodulen 7. Gut erkennbar in Figur 3 ist die hohe Verdichtung der Spleißmodule 7.

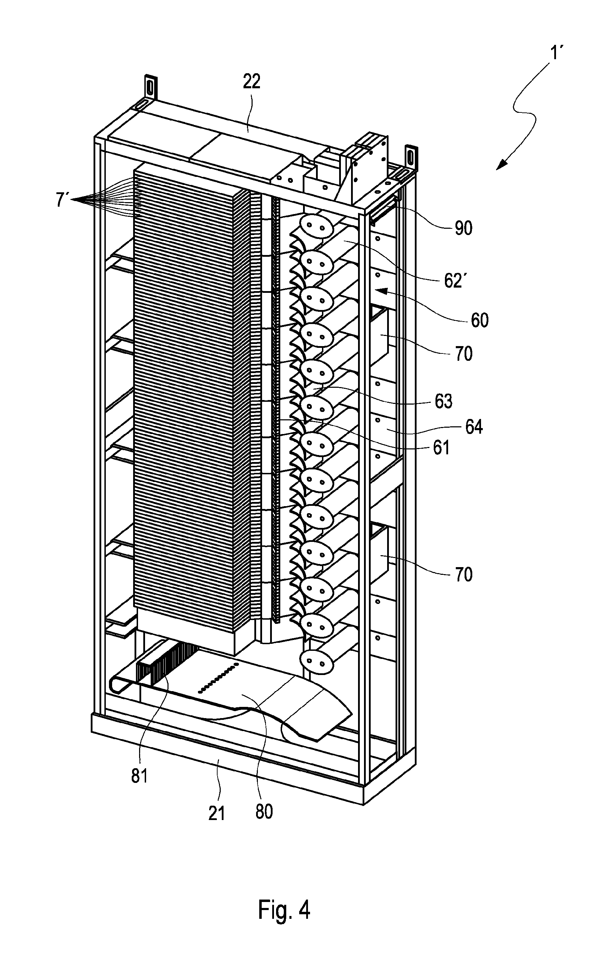

Figur 4 zeigt eine Variante eines erfindungsgemäßen Hauptverteilerschrankes 1' in einer perspektivischen Darstellung. Gut erkennbar ist der hohe Verdichtungsgrad der Spleißmodule 7', insbesondere die Integration von drei Spleißmodulen 7' in einer Höheneinheit. Jeweils neun Spleißmodulen zugeordnet ist ein Kabelführungsmodul 60, welches ein Kammelement 61, ein Biegekontrollelement 63 sowie eine Trommel 62' aufweist. Diese gezeigte Variante ermöglicht eine besonders vorteilhafte Führung, insbesondere auch Vereinzelung der jeweiligen Patchkabel. Im rechten Bereich des Hauptverteilerschrankes 1' sind Leitbleche 70 angeordnet, hinter denen nicht benötigte, weil nicht verbundene Kabelreste abgehängt werden können. In der rechten oberen Ecke des Hauptverteilerschrankes 1' ist schematisch eine Führungseinrichtung 90 für Kabelreste angedeutet, mittels welcher diese hinter die Leitbleche 70 geführt und dort abgehängt werden können. Im unteren Bereich des Hauptverteilerschrankes 1' findet sich eine Kabelabfangplatte 80, auf welcher ein Kabelhalter 81 zur Führung der in den Hauptverteilerschrank 1' eintretenden in der Figur nicht dargestellten Kabel angeordnet ist.

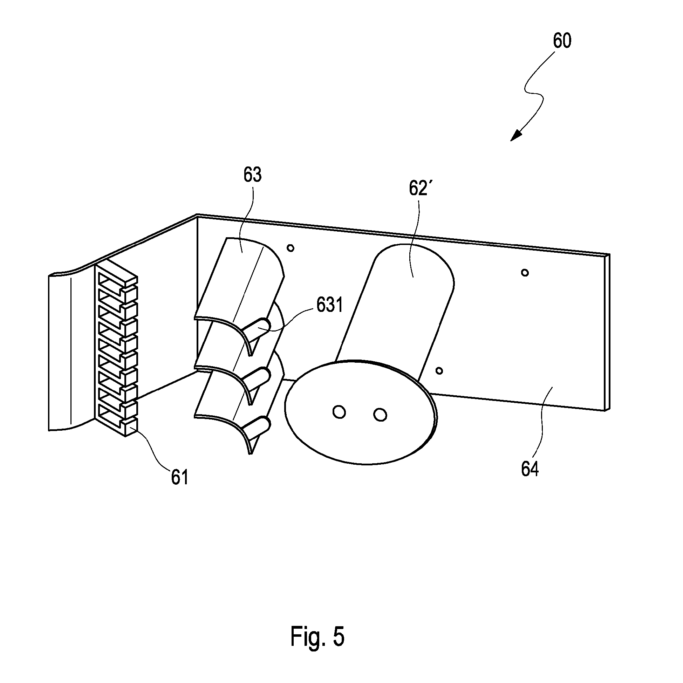

Figur 5 zeigt eine Detaildarstellung eines Kabelführungsmodules 60, welches im gezeigten Beispiel einen gekanteten Stahlblechträger 64, der pulverbeschichtet sein kann, aufweist. Auf dem Stahlblechträger 64 ist die Trommel 62', drei Biegekontrollelemente 63 sowie ein Kammelement 61 zur Vereinzelung der Patchkabel angeordnet. Bei den Biegekontrollelementen 63 kann es sich um gekantete und gebogene Stahlbleche handeln, die über in der Figur nicht sichtbare Laschen auf ihrer dem Träger 64 zugewandten Seite mit diesem verschraubt sind. An der Vorderseite der Biegekontrollelemente findet sich eine Nase 631, welche ein Abrutschen der Kabel verhindert. Auch eine Ausführung des Biegekontrollelementes 63 als Segment eines Rohres ist denkbar. Bei dem Kammelement 61 kann es sich insbesondere um ein mit dem Träger 64 verschraubtes Kunststoff-Spritzgussteil handeln. Der Träger 64 muss nicht zwingend aus Stahlblech ausgeführt sein, auch Varianten aus Kunststoff oder Aluminium sind denkbar.

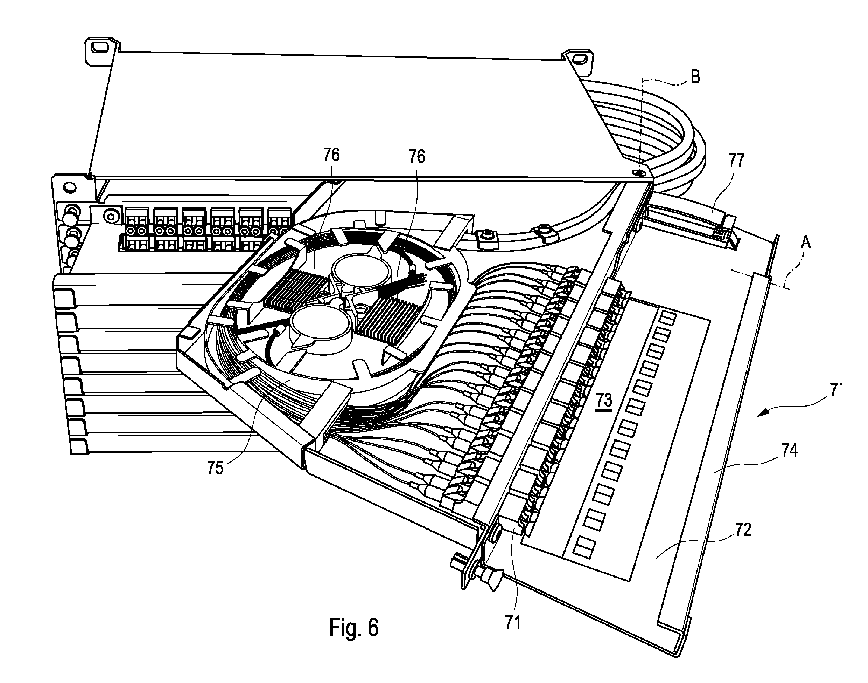

Figur 6 zeigt ein ausgeklapptes Spleißmodul 7', in welchem im gezeigten Beispiel 24 Fasern verspleißt sind. Dabei sind auf der Vorderseite des Spleißmoduls 7' Steckverbindungen 71 in der Weise angeordnet, dass sie mit ihrer Schmalseite vertikal verlaufen, so dass die gewünschte geringe Bauhöhe des Spleißmoduls 7' realisierbar wird. An der Vorderseite des Spleißmoduls 7' ist ein Ablageblech 72 angeordnet, auf welchem die zum Spleißmodul 7' führenden Patchkabel abgelegt werden können. Ferner zeigt das Ablageblech 72 eine Öffnung 73, durch welche die Steckverbindungen 71 zugänglich sind. Ebenfalls gut erkennbar ist ein schwenkbares Abdeckblech 74 an der Vorderseite des Ablagebleches 72, welches ggf. für Prüfzwecke um die Achse A hochgeschwenkt werden kann, damit die Steckverbindungen 71 von der Vorderseite des Spleißmoduls 7' her zugänglich werden.

Ebenfalls gut erkennbar in Figur 6 ist eine Spleißkassette 75, welche als Kunststoff-Spritzgussteil ausgebildet sein kann. Sie dient der definierten Führung und Sicherung derjenigen Teile der eintretenden Kabel, welche mit einem Pigtail verspleißt werden, welcher seinerseits mit der Steckverbindung 71 verbunden ist. Insbesondere die empfindliche Spleißstelle selbst wird durch die im Inneren der Spleißkassette 75 angeordneten Spleißablagen 76 zusätzlich vor mechanischer Schädigung geschützt.

Im Bereich der Drehachse B, um welche das Spleißmodul 7' geschwenkt werden kann, ist ferner die Kabelklemme 77 angeordnet, mittels welcher die Patchkabel eingeklemmt werden können, so dass sich eine gewisse Zugentlastung realisieren lässt.

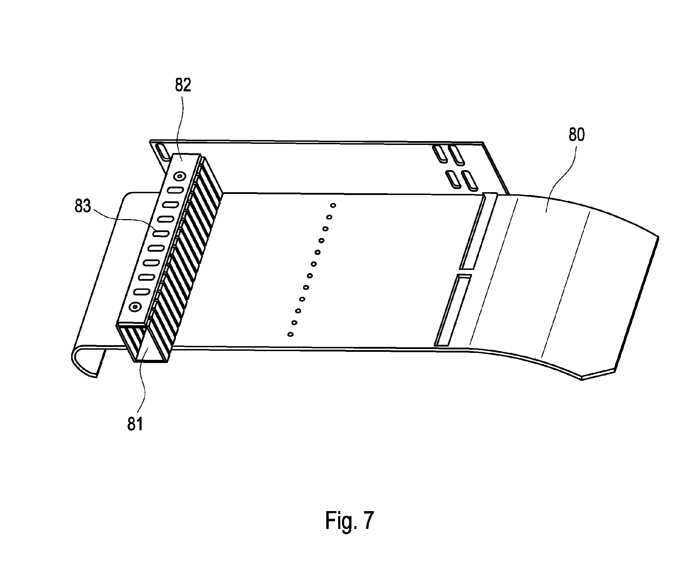

Figur 7 zeigt eine Detaildarstellung der Kabelabfangplatte 80, welche im vorliegenden Beispiel als gekantetes Stahlblechteil ausgebildet ist und der Zugentlastung der Kabel dient. Auf der Kabelabfangplatte 80 ist der Kabelhalter 81 angeordnet, insbesondere verschraubt. Der Kabelhalter 81 ist kamm- bzw. rechenförmig ausgebildet und dient der Führung und Vereinzelung der über die Kabelabfangplatte 80 laufenden, in der Figur nicht dargestellten Kabel. Er kann ebenfalls aus Stahlblech gefertigt sein. Im gezeigten Beispiel ist mit der Oberseite des Kabelhalters eine Klemmschiene 82 verbunden, insbesondere verschraubt, welche Laschen 83 aufweist, die zur Befestigung beispielsweise von Kabelbindern dienen können.

## Patentansprüche

1. Lichtwellenleiter-Verteilerschrank (1), mit in einem Gehäuse (2) angeordneten Spleißmodulen (7,7'), wobei aus einer Anzahl von vertikal übereinander angeordneten Spleißmodulen (7,7') ein Spleißmodulstapel (8) ausgebildet ist,
**dadurch gekennzeichnet, dass** mindestens ein Spleißmodul (7,7') eine Drittel Höheneinheit aufweist.

2. Lichtwellenleiter-Verteilerschrank (1) nach Anspruch 1,
**dadurch gekennzeichnet, dass** jedes Spleißmodul (7) eine Drittel Höheneinheit aufweist und insbesondere aus einem metallischen Werkstoff hergestellt, tauchgrundiert und pulverbeschichtet ist.

3. Lichtwellenleiter-Verteilerschrank nach einem der vorangehenden Ansprüche,
**dadurch gekennzeichnet, dass** zumindest ein Spleißmodul (7) über eine vertikale Achse (B) aus dem Spleißmodulstapel (8) nach außen ausschwenkbar ist.

4. Lichtwellenleiter-Verteilerschrank nach einem der Ansprüche 1 bis 3,
**dadurch gekennzeichnet, dass** in einem Spleißmodul (7) bis zu 24 Fasern angeschlossen sind.

5. Lichtwellenleiter-Verteilerschrank nach Anspruch 4,
**dadurch gekennzeichnet, dass** in einem Spleißmodul (7) eine Spleißkassette (75) für jeweils 24 Fasern angeordnet ist.

6. Lichtwellenleiter- Verteilerschrank nach einem der vorangehenden Ansprüche,
**dadurchgekennzeichnet** , dass einer Mehrzahl, insbesondere neun Spleißmodulen (7') ein Kabelführungsmodul (60) zugeordnet ist, welches ein Kammelement 61, ein Biegekontrollelement 63 sowie eine Trommel 62' aufweist.

7. Lichtwellenleiter- Verteilerschrank nach einem der vorangehenden Ansprüche,
**dadurch gekennzeichnet , dass** an der Vorderseite eines Spleißmoduls (7') Steckverbindungen (71) in der Weise angeordnet sind, dass sie mit ihrer Schmalseite vertikal verlaufen.

8. Lichtwellenleiter- Verteilerschrank nach einem der vorangehenden Ansprüche,
**dadurch gekennzeichnet , dass** an der Vorderseite eines Spleißmoduls (7') ein Ablageblech (72) angeordnet ist, auf welchem die zum Spleißmodul (7') führenden Patchkabel abgelegt werden können.

9. Lichtwellenleiter- Verteilerschrank nach Anspruch 8,
**dadurch gekennzeichnet , dass** ein schwenkbares Abdeckblech (74) an der Vorderseite des Ablagebleches (72) angeordnet ist, welches um eine Achse (A) hochgeschwenkt werden kann.
